# EUROPEAN PATENT APPLICATION

(11) **EP 4 730 836 A1**
(43) Date of publication of application: **22.04.2026**
(21) Application number: 24844394.7
(22) Date of filing: 04.06.2024
(51) Int. Cl.: H04Q 11/00

(54) **METHOD FOR CONTROLLING OPTICAL MODULE BY SINGLE BOARD IN OLT AND RELATED APPARATUS**

(30) Priority: 24.07.2023 CN 202310920366
(71) Applicant: Huawei Technologies Co., Ltd., Shenzhen, Guangdong 518129 (CN)
(72) Inventor: CAO, Rixiang, Shenzhen, Guangdong 518129 (CN); LIN, Huafeng, Shenzhen, Guangdong 518129 (CN); LI, Yuanmou, Shenzhen, Guangdong 518129 (CN)
(74) Representative: Isarpatent
(86) International application number: PCT/CN2024/097183
(87) International publication number: WO 2025/020699

(57) **Abstract**

Embodiments of this application disclose a method for controlling an optical module by a board in an OLT and a related apparatus. During upstream slot allocation, the board in the OLT obtains information such as an identifier of a target ONU and a target operating rate of the target ONU, and the board sends the information to an optical module through a target interface. Then, the optical module determines an operating parameter based on the information carried in a target message, for example, determines operating parameters of an equalizer, an amplifier, a filter, and a laser. In other words, this application provides a new interface solution between a board and an optical module. The board can transfer more information to the optical module according to the new interface solution, to satisfy higher complexity and efficiency requirements of the board for controlling the optical module.

## Description

This application claims priority to Chinese Patent Application No. 202310920366.X, filed with the China National Intellectual Property Administration on July 24, 2023 and entitled "METHOD FOR CONTROLLING OPTICAL MODULE BY BOARD IN OLT AND RELATED APPARATUS", which is incorporated herein by reference in its entirety.

### TECHNICAL FIELD

This application relates to the field of optical communication, and in particular, to a method for controlling an optical module by a board in an OLT and a related apparatus.

### BACKGROUND

In a passive optical network (Passive Optical Network, PON) system, an optical line terminal (Optical Line Terminal, OLT) establishes a communication relationship with all optical network units (Optical Network Unit, ONU) in the network through an optical splitter. During upstream transmission, the ONUs communicate with the OLT in time division multiplexing mode. Each communication signal from an ONU is referred to as a burst optical signal.

There is a media access control (Media Access Control, MAC) chip disposed in a board in the OLT, and there is a physical (Physical, PHY) chip disposed in an optical module in the OLT. Currently, there are two types of interfaces between the MAC chip and the PHY chip: I²C communication interfaces, and dedicated level interfaces such as Reset, rateselect, and TX disable. The I²C communication interfaces have insufficient bandwidth and latency, while the dedicated level interfaces like Reset, rateselect, and TX disable can convey only limited information. Therefore, it is difficult for the MAC chip to control the PHY chip to satisfy higher complexity and efficiency requirements.

### SUMMARY

Embodiments of this application provide a method for controlling an optical module by a board in an OLT and a related apparatus. The board can transfer more information to the optical module according to a new interface solution, to satisfy higher complexity and efficiency requirements of the board for controlling the optical module.

According to a first aspect, an embodiment of this application provides a method for controlling an optical module by a board in an OLT. There is a target interface between the board and the optical module. The method is applied to the optical module. Specifically, the optical module receives, through the target interface, a target message sent by the board. The target message includes an identifier of a target optical network unit ONU and a target operating rate of the target ONU. Then, the optical module determines an operating parameter based on the target message, for example, determines operating parameters of an equalizer, an amplifier, a filter, and a laser.

In this implementation, during upstream slot allocation, the board in the OLT obtains information such as the identifier of the target ONU and the target operating rate of the target ONU, and the board sends the information to the optical module in the OLT through the target interface. Then, the optical module determines the operating parameter based on the information carried in the target message, for example, determines the operating parameters of the equalizer, the amplifier, the filter, and the laser. In other words, this application provides a new interface solution between a board and an optical module. The board can transfer more information to the optical module according to the new interface solution, to satisfy higher complexity and efficiency requirements of the board for controlling the optical module.

In some possible implementations, the board includes a media access control (Media Access Control, MAC) chip, and the optical module includes a physical (Physical, PHY) chip. There is the target interface between the MAC chip and the PHY chip. The target interface between the MAC chip and the PHY chip is different from an I²C communication interface and a dedicated level interface such as Reset, rateselect, or TX disable. The MAC chip can transfer more information to the PHY chip according to the new interface solution, to satisfy higher complexity and efficiency requirements of the MAC chip for controlling the PHY chip.

In some possible implementations, that the optical module determines the operating parameter based on the target message includes: The optical module determines, from a preset parameter table, a first tap coefficient corresponding to the identifier of the target ONU. The parameter table includes at least one correspondence between an identifier of an ONU and a tap coefficient of the equalizer. For example, ONU ID 1 corresponds to a tap coefficient 1, and ONU ID 2 corresponds to a tap coefficient 2. The rest may be deduced by analogy. Then, the optical module performs convergence based on the first tap coefficient to obtain a second tap coefficient.

In this implementation, a corresponding tap coefficient is preconfigured for each ONU in the parameter table provided in this application, and the tap coefficient corresponding to each ONU in the parameter table is already an ideal tap coefficient. Therefore, that the equalizer performs convergence by using the tap coefficient in the parameter table helps to accelerate a convergence speed. Then, because the convergence speed of the equalizer is improved, upstream burst recovery duration of the OLT is reduced, and transmission efficiency is improved. In addition, because the tap coefficient is configured for each ONU in a targeted manner, a good application effect is also achieved in a scenario in which there are a plurality of ONUs.

In some possible implementations, the method further includes: The optical module equalizes, based on the second tap coefficient, a target signal sent by the target ONU, to improve a signal-to-noise ratio of the signal.

In some possible implementations, the target message further includes a comparison result between a bit error rate of an equalized target signal and a first preset value, and the method further includes: If the bit error rate is less than the first preset value, the optical module performs convergence based on the second tap coefficient to obtain a third tap coefficient, and equalizes the target signal based on the third tap coefficient; or if the bit error rate is greater than or equal to the first preset value, the optical module performs convergence again based on the first tap coefficient. In this implementation, the board analyzes the counted bit error rate to determine whether the tap coefficient obtained through the convergence is better than the tap coefficient before the convergence, and the board notifies the optical module of an analysis result, so that the optical module selects a better tap coefficient for convergence next time. This helps accelerate the convergence speed.

In some possible implementations, the target message further includes a comparison result between a packet length of the target signal sent by the target ONU with a second preset value, and the method further includes: If the packet length is greater than or equal to the second preset value, the optical module performs convergence based on the first tap coefficient to obtain the second tap coefficient; or if the packet length is less than the second preset value, the optical module equalizes, based on the first tap coefficient, the target signal sent by the target ONU. In this implementation, the board determines, based on the packet length of the target signal, whether the optical module has sufficient time to perform tap coefficient convergence, to avoid incorrect convergence caused by an excessively short packet length.

In some possible implementations, the method further includes: The optical module stores a correspondence between the identifier of the target ONU and the second tap coefficient in the parameter table, so that the second tap coefficient is subsequently selected from the parameter table and provided to the equalizer for convergence.

In some possible implementations, that the optical module determines the operating parameter based on the target message includes: The optical module determines a gain of the amplifier, a filtering bandwidth of the filter, and an operating bandwidth of the equalizer based on the target operating rate. In this implementation, the optical module determines a related operating parameter based on an operating rate of the target ONU, to better adapt to the target ONU.

In some possible implementations, indication information indicates the laser to emit light or not to emit light, and that the optical module determines the operating parameter based on the target message includes: The optical module determines an operating parameter of the laser based on the indication information. In other words, the optical module can control, based on an indication of the board, whether the laser emits light. For example, the optical module controls the laser to emit light during normal operation, and controls the laser not to emit light during energy saving. For another example, during protection switching of a PON system, a laser corresponding to one PON port is controlled not to emit light, and a laser corresponding to another PON port is controlled to emit light.

According to a second aspect, an embodiment of this application provides a method for controlling an optical module by a board in an OLT, where there is a target interface between a board and an optical module. The method is applied to the board. Specifically, the board generates a target message. The target message includes an identifier of a target optical network unit ONU and a target operating rate of the target ONU. Then, the board sends the target message to the optical module through the target interface, to enable the optical module to determine an operating parameter based on the target message.

In this implementation, during upstream slot allocation, the board in an OLT obtains information such as the identifier of the target ONU and the target operating rate of the target ONU, and the board sends the information to the optical module through the target interface. Then, the optical module determines the operating parameter based on the information carried in the target message, for example, determines the operating parameters of the equalizer, the amplifier, the filter, and the laser. In other words, this application provides a new interface solution between a board and an optical module. The board can transfer more information to the optical module according to the new interface solution, to satisfy higher complexity and efficiency requirements of the board for controlling the optical module.

In some possible implementations, the board includes a MAC chip, and the optical module includes a PHY chip. There is the target interface between the MAC chip and the PHY chip. The target interface between the MAC chip and the PHY chip is different from an I²C communication interface and a dedicated level interface such as Reset, rateselect, or TX disable. The MAC chip can transfer more information to the PHY chip according to the new interface solution, to satisfy higher complexity and efficiency requirements of the MAC chip for controlling the PHY chip.

In some possible implementations, the method further includes: The board obtains a bit error rate obtained by the optical module by equalizing a target signal sent by the target ONU, and compares the bit error rate with a first preset value. The target message further includes a comparison result between the bit error rate and the first preset value. In this case, the board analyzes the counted bit error rate to determine whether a tap coefficient obtained through convergence is better than a tap coefficient before the convergence, and the board notifies the optical module of an analysis result, so that the optical module selects a better tap coefficient for convergence next time. This helps accelerate a convergence speed.

In some possible implementations, the method further includes: The board obtains a packet length of the target signal sent by the target ONU, and compares the packet length with a second preset value. The target message further includes a comparison result between the packet length and the second preset value. In this case, the board determines, based on the packet length of the target signal, whether the optical module has sufficient time for tap coefficient convergence, to avoid incorrect convergence caused by an excessively short packet length.

In some possible implementations, the target message further includes indication information, and the indication information indicates the laser to emit light or not to emit light. In other words, the optical module can control, based on an indication of the board, whether the laser emits light. For example, the optical module controls the laser to emit light during normal operation, and controls the laser not to emit light during energy saving. For another example, during protection switching of a PON system, a laser corresponding to one PON port is controlled not to emit light, and a laser corresponding to another PON port is controlled to emit light.

According to a third aspect, an embodiment of this application provides an optical module. An OLT includes the optical module and a board, and there is a target interface between the optical module and the board. The optical module includes a processor and a transceiver. The transceiver is configured to receive, through a target interface, a target message sent by the board, where the target message includes an identifier of a target optical network unit ONU and a target operating rate of the target ONU. The processor is configured to determine an operating parameter based on the target message.

In some possible implementations, the board includes a MAC chip, and the optical module includes a PHY chip. There is the target interface between the MAC chip and the PHY chip. The target interface between the MAC chip and the PHY chip is different from an I²C communication interface and a dedicated level interface such as Reset, rateselect, or TX disable. The MAC chip can transfer more information to the PHY chip according to a new interface solution, to satisfy higher complexity and efficiency requirements of the MAC chip for controlling the PHY chip.

In some possible implementations, the processor is specifically configured to determine, from a preset parameter table, a first tap coefficient corresponding to the identifier of the target ONU. The parameter table includes at least one correspondence, and the correspondence is a correspondence between an identifier of an ONU and a tap coefficient of an equalizer. Then, convergence is performed based on the first tap coefficient to obtain a second tap coefficient.

In some possible implementations, the parameter table includes m tap coefficients corresponding to the identifier of the target ONU, the m tap coefficients correspond one to one to m transmit rates of the target ONU, and m is an integer greater than 1; and the processor is specifically configured to determine, from the m tap coefficients, the first tap coefficient corresponding to the target operating rate.

In some possible implementations, the processor is further configured to equalize, based on the second tap coefficient, a target signal sent by the target ONU.

In some possible implementations, the target message further includes a comparison result between a bit error rate of an equalized target signal and a first preset value, and the processor is further configured to: if the bit error rate is less than the first preset value, perform convergence based on the second tap coefficient to obtain a third tap coefficient, and equalize the target signal based on the third tap coefficient; or if the bit error rate is greater than or equal to the first preset value, perform convergence again based on the first tap coefficient.

In some possible implementations, the target message further includes a comparison result between a packet length of the target signal sent by the target ONU with a second preset value, and the processor is further configured to: if the packet length is greater than or equal to the second preset value, perform convergence based on the first tap coefficient to obtain the second tap coefficient; or if the packet length is less than the second preset value, equalize, based on the first tap coefficient, the target signal sent by the target ONU.

In some possible implementations, the processor is further configured to store a correspondence between the identifier of the target ONU and the second tap coefficient in the parameter table.

In some possible implementations, the processor is specifically configured to determine a gain of an amplifier, a filtering bandwidth of a filter, and an operating bandwidth of the equalizer based on the target operating rate.

In some possible implementations, the target message further includes indication information, and the indication information indicates a laser to emit light or not to emit light; and the processor is specifically configured to determine an operating parameter of the laser based on the indication information.

According to a fourth aspect, an embodiment of this application provides a board. An OLT includes an optical module and the board, and there is a target interface between the optical module and the board. The board includes a processor and a transceiver. The processor is configured to generate a target message, where the target message includes an identifier of a target optical network unit ONU and a target operating rate of the target ONU. The transceiver is configured to send the target message to the optical module, to enable the optical module to determine an operating parameter based on the target message.

In some possible implementations, the board includes a MAC chip, and the optical module includes a PHY chip. There is the target interface between the MAC chip and the PHY chip. The target interface between the MAC chip and the PHY chip is different from an I²C communication interface and a dedicated level interface such as Reset, rateselect, or TX disable. The MAC chip can transfer more information to the PHY chip according to a new interface solution, to satisfy higher complexity and efficiency requirements of the MAC chip for controlling the PHY chip.

In some possible implementations, the processor is further configured to: obtain a bit error rate obtained by the optical module by equalizing a target signal sent by the target ONU, and compares the bit error rate with a first preset value. The target message further includes a comparison result between the bit error rate and the first preset value.

In some possible implementations, the processor is further configured to: obtain a packet length of the target signal sent by the target ONU, and compare the packet length with a second preset value. The target message further includes a comparison result between the packet length and the second preset value.

In some possible implementations, the target message further includes indication information, and the indication information indicates a laser to emit light or not to emit light.

According to a fifth aspect, an embodiment of this application provides an OLT. The OLT includes the optical module described in any implementation of the third aspect and the board described in any implementation of the fourth aspect.

In this embodiment of this application, during upstream slot allocation, the board in the OLT obtains information such as an identifier of a target ONU and a target operating rate of the target ONU, and the board sends the information to the optical module in the OLT through a target interface. Then, the optical module determines an operating parameter based on the information carried in a target message, for example, determines operating parameters of an equalizer, an amplifier, a filter, and a laser. In other words, this application provides a new interface solution between a board and an optical module. The board can transfer more information to the optical module according to the new interface solution, to satisfy higher complexity and efficiency requirements of the board for controlling the optical module.

### BRIEF DESCRIPTION OF DRAWINGS

FIG. 1 is a diagram of an architecture of a PON system;
FIG. 2 is a diagram of an embodiment of a method for controlling an optical module by a board according to embodiments of this application;
FIG. 3 is a diagram of synchronizing a target message according to an embodiment of this application;
FIG. 4 is a diagram of a first scenario in which a board controls an optical module according to an embodiment of this application;
FIG. 5 is a diagram of a parameter table according to an embodiment of this application;
FIG. 6 is a diagram of a first frame format of a target message according to an embodiment of this application;
FIG. 7 is a diagram of a second scenario in which a board controls an optical module according to an embodiment of this application;
FIG. 8 is a diagram of a third scenario in which a board controls an optical module according to an embodiment of this application;
FIG. 9 is a diagram of a second frame format of a target message according to an embodiment of this application;
FIG. 10 is a diagram of a possible structure of an optical module according to an embodiment of this application;
FIG. 11 is a diagram of a possible structure of a board according to an embodiment of this application; and
FIG. 12 is a diagram of a possible structure of an optical module in an OLT according to an embodiment of this application.

### DESCRIPTION OF EMBODIMENTS

Embodiments of this application provide a method for controlling an optical module by a board in an OLT and a related apparatus. The board can transfer more information to the optical module according to a new interface solution, to satisfy higher complexity and efficiency requirements of the board for controlling the optical module. It should be noted that in the specification, claims, and the foregoing accompanying drawings of this application, the terms "first", "second", and the like are intended to distinguish between similar objects but do not limit a specific order or sequence. It should be understood that the foregoing terms may be interchanged in appropriate cases, so that embodiments described in this application can be implemented in an order other than the content described in this application. In addition, the terms "include", "have", and any other variant thereof are intended to cover a non-exclusive inclusion. For example, a process, a method, a system, a product, or a device that includes a series of steps or units is not necessarily limited to those expressly enumerated steps or units, but may include other steps or units not expressly enumerated or inherent to the process, method, product, or device.

This application is mainly applied to a passive optical network (passive optical network, PON) system. The following describes an architecture of the PON system.

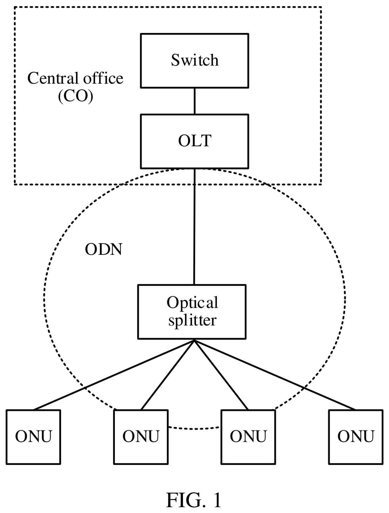

FIG. 1 is a diagram of an architecture of a PON system. An optical line termination (Optical Line Termination, OLT) is connected to an upper-layer network side device (for example, a switch or a router), and is connected to one or more lower-layer optical distribution networks (optical distribution networks, ODNs).

The ODN includes a passive optical splitter for optical power distribution, a feeder fiber connected between the passive optical splitter and the OLT, and a distribution fiber connected between the passive optical splitter and an optical network unit (optical network unit, ONU). During downstream data transmission, the ODN transmits downstream data of the OLT to each ONU through the optical splitter, and the ONU selectively receives downstream data carrying an identifier of the ONU. During upstream data transmission, the ODN combines optical signals sent by N ONUs into one optical signal, and transmits the optical signal to the OLT. If the ONU also provides a user port function, for example, the ONU provides an Ethernet user port or a plain old telephone service (plain old telephone service, POTS) user port, the ONU is referred to as an optical network termination (optical network termination, ONT).

This application provides a method for controlling an optical module by a board. The board and the optical module are located in an OLT. In this application, a target interface is newly defined between the board and the optical module, for the board to transmit more information to the optical module. It should be understood that the board includes a MAC chip, the optical module includes a PHY chip, and the target interface may be specifically an interface between the MAC chip and the PHY chip. It should be further understood that one or more PHY chips may be disposed in the optical module, and there is the target interface between the MAC chip and at least one PHY chip. For ease of description, an example in which the board and the optical module transmit information through the target interface is used below for description. In some possible scenarios, a solution in which the MAC chip in the board and the PHY chip in the optical module transmit information through the target interface may alternatively be used. In other words, an operation performed by the board is specifically implemented by the MAC chip, and an operation performed by the optical module is specifically implemented by at least one PHY chip.

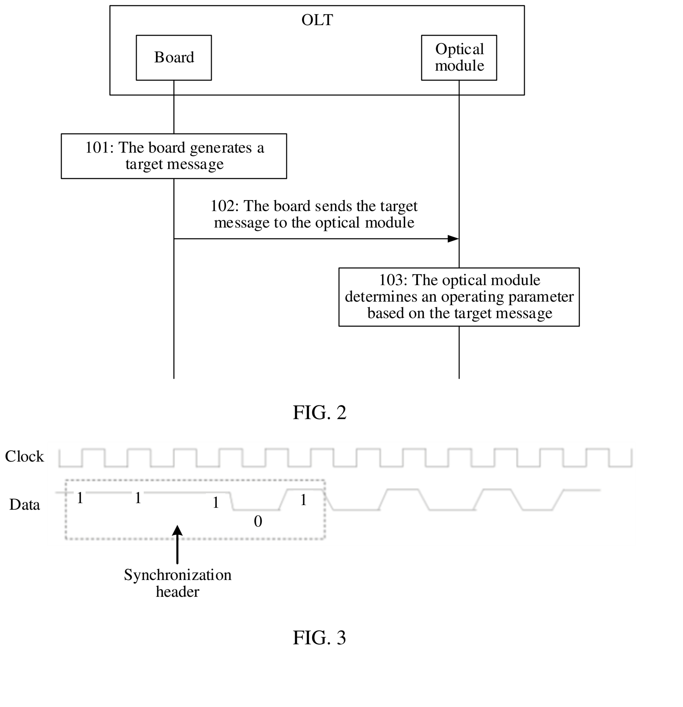

FIG. 2 is a diagram of an embodiment of a method for controlling an optical module by a board according to an embodiment of this application. In this example, the method for controlling the optical module by the board includes the following steps.

101: The board generates a target message.

The board is responsible for performing upstream burst slot allocation for each ONU, where an upstream optical signal sent by the ONU each time is referred to as an optical burst signal, and is briefly referred to as an upstream burst packet. The following descriptions use a target ONU of the ONUs as an example for description, and are also applicable to another ONU. The board allocates, to the target ONU, information such as an identifier of the target ONU (also referred to as a target ONU ID), a target operating rate of the target ONU, a packet length of an upstream burst packet of the target ONU, and a start moment of the upstream burst packet of the target ONU. It should be understood that, during actual application, the board sends information about the upstream burst slot allocation to the target ONU via a downlink, so that the target ONU sends an upstream burst packet to an OLT based on the information. In addition, in this embodiment of this application, the board packs some or all of the information about the upstream burst slot allocation to generate the target message, and sends the target message to the optical module. It should be understood that the target message carries at least the target ONU ID and the target operating rate of the target ONU. In different application scenarios, the target message may further carry more other information. The following separately provides descriptions with reference to different scenarios.

It should be noted that this application provides a new interface solution between a board and an optical module, where the new interface solution is referred to as a target interface herein. For example, the target interface is a high-speed serial interface. The target interface may be considered as a channel for transmitting information between the board and the optical module. It should be understood that the target interface between the board and the optical module is different from an existing I²C communication interface and a dedicated level interface such as Reset, rateselect, or TX disable. The board transmits the target message to the optical module through the target interface, in other words, the target interface is a newly defined interface for the board to transmit more information to the optical module. The information transmitted through the target interface includes but is not limited to the information about the upstream burst slot allocation performed by the board.

102: The board sends the target message to the optical module.

In this embodiment, a MAC chip sends the target message to the optical module through the newly defined target interface, improving transmission efficiency. It should be understood that the board can learn of a moment at which the upstream burst packet sent by the target ONU arrives at the OLT. To enable the optical module to adjust an operating parameter in a timely manner based on the target message, the board needs to send the target message to the optical module before the upstream burst packet arrives at the OLT. In this way, for an upstream burst slot of each ONU, the board can send related information of a corresponding ONU to the optical module in advance, so that the optical module adjusts a related operating parameter in advance before an upstream burst packet arrives, to better process the upstream burst packet.

103: The optical module determines the operating parameter based on the target message.

After receiving the target message from the board, the optical module parses the target message to obtain information such as the target ONU ID and the target operating rate of the target ONU. Then, the optical module determines a related operating parameter based on the target message to cope with an incoming upstream burst packet. It should be understood that the target message has a preset frame format. In a possible implementation, a start position of the target message includes a synchronization header, and the optical module knows the synchronization header of the target message in advance, to synchronize a received message based on the synchronization header. If the optical module determines the target message through synchronization, the optical module further parses the target message.

FIG. 3 is a diagram of synchronizing a target message according to an embodiment of this application. As shown in FIG. 3, first 16 bits of the target message are used as a synchronization header. In an example, first 14 bits of the synchronization header are all 1, and last two bits of the synchronization header are 01. Once synchronization succeeds, the optical module subsequently parses the target message in a frame format of the target message starting from 01.

It should be understood that the optical module adjusts operating parameters of different devices based on information obtained by parsing the target message. In an example, these devices may be integrated into a PHY chip of the optical module. In another example, these devices may alternatively be used as devices that are in the optical module and that are independent of the PHY chip.

It should be noted that, a scenario in which the optical module adjusts the operating parameter includes but is not limited to the following three scenarios. First scenario: The optical module adjusts a tap coefficient of an equalizer based on the target message. Second scenario: The optical module selects rates for devices such as an amplifier, a filter, and an equalizer based on the target message. Third scenario: The optical module adjusts an operating parameter of a laser based on the target message. The following separately describes the three scenarios.

First scenario: The optical module adjusts the tap coefficient of the equalizer based on the target message.

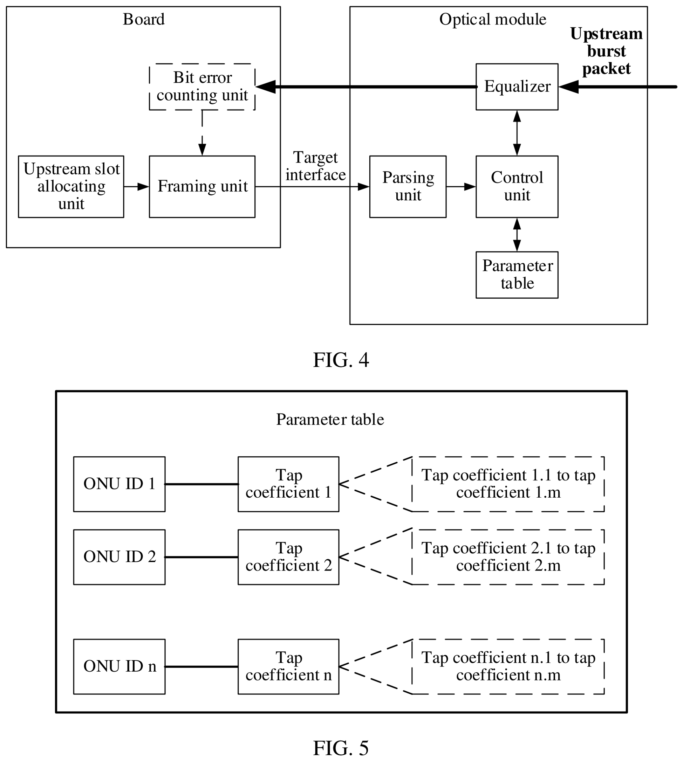

FIG. 4 is a diagram of a first scenario in which a board controls an optical module according to an embodiment of this application. As shown in FIG. 4, an upstream slot allocating unit of the board performs upstream burst slot allocation for each ONU, and sends information about the upstream burst slot allocation to a framing unit. The framing unit packs and frames the received information to obtain a target message, and sends the target message to a parsing unit of the optical module through a target interface. The parsing unit parses the target message to obtain the information about the upstream burst slot allocation performed by the board, and sends the information obtained through parsing to a control unit. Then, the control unit determines an operating parameter of an equalizer based on the information obtained through parsing. Specifically, a parameter table is preconfigured for the optical module, and the parameter table stores a correspondence between an ONU ID and a tap coefficient.

FIG. 5 is a diagram of a parameter table according to an embodiment of this application. As shown in FIG. 5, ONU ID 1 corresponds to a tap coefficient 1, ONU ID 2 corresponds to a tap coefficient 2, ..., and ONU ID n corresponds to a tap coefficient n. An upstream slot of the current ONU ID 1 is as an example, and information obtained through parsing by the parsing unit includes ONU ID 1. The control unit selects the tap coefficient 1 from the parameter table based on ONU ID 1, and configures the tap coefficient 1 for the equalizer. The equalizer performs convergence based on the tap coefficient 1 to obtain an optimized tap coefficient. Then, the equalizer equalizes, based on the tap coefficient obtained through the convergence, an upstream burst packet sent by an ONU identified by ONU ID 1, to improve a signal-to-noise ratio of a signal, and sends an equalized signal to the board. It should be understood that the tap coefficient obtained by performing convergence by the equalizer may also be stored in the parameter table by the control unit, in other words, a correspondence between ONU ID 1 and the tap coefficient obtained through the convergence is updated in the parameter table.

It should be noted that, in a conventional technology, the equalizer performs convergence for each ONU based on a fixed value to obtain a tap coefficient. However, a corresponding tap coefficient is preconfigured for each ONU in the parameter table provided in this application, and the tap coefficient corresponding to each ONU in the parameter table is already an ideal tap coefficient. Therefore, that the equalizer performs convergence by using the tap coefficient in the parameter table helps to accelerate a convergence speed. Then, because the convergence speed of the equalizer is improved, upstream burst recovery duration of an OLT is reduced, and transmission efficiency is improved. In addition, because the tap coefficient is configured for each ONU in a targeted manner, a good application effect is also achieved in a scenario in which there are a plurality of ONUs.

In some possible scenarios, as shown in FIG. 5, each ONU ID in the parameter table corresponds to m tap coefficients, and the m tap coefficients correspond one to one to m operating rates of the ONU. ONU ID 1 is used as an example. The ONU may have an operating rate of 10G PON, an operating rate of 25G PON, and an operating rate of 50G PON. In this case, in the parameter table, there are three tap coefficients corresponding to ONU ID 1, which are respectively a tap coefficient 1.1, a tap coefficient 1.2, and a tap coefficient 1.3. The three tap coefficients respectively correspond to the three operating rates of ONU ID 1. Therefore, the control unit selects a corresponding tap coefficient from the parameter table based on the ONU ID that is obtained by the parsing unit through parsing and the operating rate of ONU ID, and provides the tap coefficient to the equalizer, so that the equalizer obtains a better tap coefficient through convergence more quickly. In this way, a scenario in which an ONU has a plurality of operating rates may also be better adapted.

It should be noted that, if a length of an upstream burst packet is too short, the optical module may not have enough time to perform tap coefficient convergence. In other words, in some possible scenarios, whether the optical module performs tap coefficient convergence depends on a length of an upstream burst packet, to avoid incorrect convergence caused by an excessively short upstream burst packet. Specifically, the board obtains the length of the upstream burst packet and determines whether the length of the upstream burst packet is greater than or equal to the second preset value, so that the board sends a determining result to the optical module by using a target message. If the length of the upstream burst packet is greater than or equal to the second preset value, it indicates that the optical module has sufficient time to perform tap coefficient convergence. Therefore, the optical module performs convergence based on the first tap coefficient to obtain a second tap coefficient, and equalizes the upstream burst packet based on the second tap coefficient. If the length of the upstream burst packet is less than the second preset value, it indicates that the optical module does not have sufficient time to perform tap coefficient convergence. Therefore, the optical module directly equalizes the upstream burst packet based on the first tap coefficient. It should be understood that, in some other possible scenarios, the board may alternatively send a length of an upstream burst packet to the optical module by using a target message, and the optical module determines whether the length of the upstream burst packet is greater than or equal to the second preset value, and performs a subsequent operation.

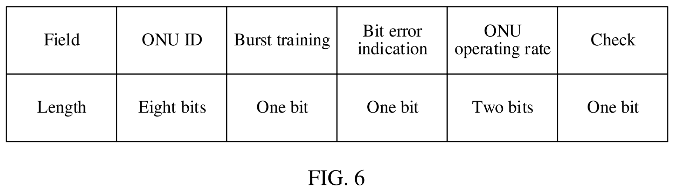

FIG. 6 is a diagram of a first frame format of a target message according to an embodiment of this application. As shown in FIG. 6, the target message includes the following fields: an ONU ID field with a length of eight bits; a burst training field with a length of one bit; a bit error indication field with a length of one bit; an ONU operating rate field with a length of two bits; and a check field with a length of one bit. In an example, a value 0-254 of the ONU ID field indicates each registered and authorized ONU, and a value 255 of the ONU ID field indicates an unregistered ONU or a rogue ONU. A value 1 of the burst training field indicates to update a tap coefficient in a parameter table, and a value 0 of the burst training field indicates not to update the tap coefficient in the parameter table. A value 1 of the bit error indication field indicates that a bit error rate of an upstream burst packet is high, and a value 0 of the bit error indication field indicates that the bit error rate of the upstream burst packet is normal. A value 00 of the ONU operating rate field indicates that the field is used for reservation, a value 01 of the ONU operating rate field indicates an operating rate of 10G PON, a value 10 of the ONU operating rate field indicates an operating rate of 25G PON, and a value 11 of the ONU operating rate field indicates an operating rate of 50G PON. The check field is used to check whether the target message is incorrect. If the target message is incorrect, the target message is discarded.

It should be noted that, the optical module may further analyze, based on information sent by the board, whether a tap coefficient obtained by the equalizer through convergence satisfies a requirement. If the requirement is satisfied, the control unit updates an original tap coefficient in the parameter table to the tap coefficient obtained through the convergence, and subsequently provides the updated tap coefficient to the equalizer for convergence. This helps further accelerate the convergence speed. If the requirement is not satisfied, the control unit does not update the parameter table, and provides the original tap coefficient in the parameter table to the equalizer for re-convergence.

In a possible implementation, as shown in FIG. 4, the board further includes a bit error counting unit. The bit error counting unit is configured to: count a bit error rate of an equalized upstream burst packet, determine whether the bit error rate is less than a first preset value, and send a comparison result between the bit error rate and the first preset value to the framing unit. The target message sent by the framing unit to the optical module carries the comparison result between the bit error rate and the first preset value. The parsing unit of the optical module parses out the comparison result from the target message, and sends the comparison result to the control unit. If the bit error rate is less than the first preset value, it indicates that the bit error rate is normal and a tap coefficient obtained through first convergence is good. The control unit stores the tap coefficient obtained by the equalizer by performing first convergence in the parameter table, and before a next upstream burst packet arrives, provides the tap coefficient obtained through the first convergence to the equalizer for second convergence. If the bit error rate is greater than or equal to the first preset value, it indicates that the bit error rate is abnormal and a tap coefficient obtained through first convergence is poor. Before a next upstream burst packet arrives, the control unit still provides the original tap coefficient in the parameter table to the equalizer for second convergence. In another possible implementation, the board may alternatively directly send a counted bit error rate to the optical module by using the target message, and the control unit of the optical module determines whether the bit error rate is less than a first preset value, and performs a subsequent operation.

Second scenario: The optical module selects the rates for the devices such as the amplifier, the filter, and the equalizer based on the target message.

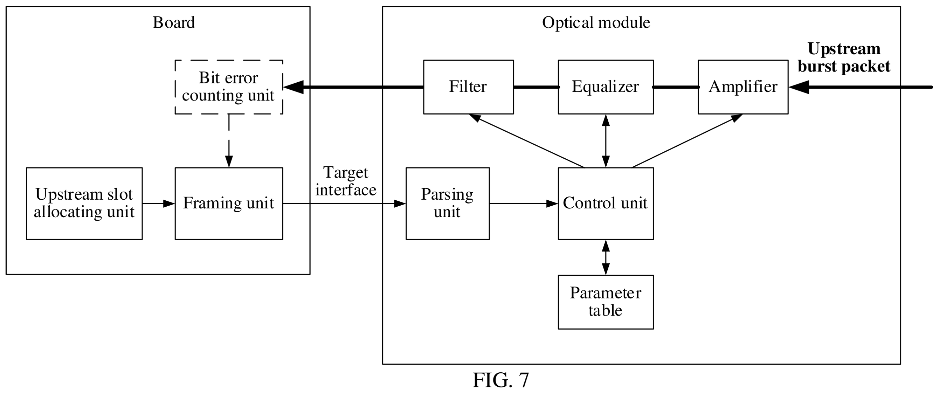

FIG. 7 is a diagram of a second scenario in which a board controls an optical module according to an embodiment of this application. Different from the scenario shown in FIG. 4, as shown in FIG. 7, the control unit of the optical module determines operating parameters of an amplifier, an equalizer, and a filter based on information obtained by the parsing unit through parsing. The information obtained by the parsing unit through parsing includes an operating rate of an ONU, and the control unit outputs a rate indication level to the amplifier, the equalizer, and the filter based on the operating rate of the ONU. For example, the control unit outputs a rate indication level 1 based on an operating rate 1 of the ONU, and the control unit outputs a rate indication level 2 based on an operating rate 2 of the ONU. The rest may be deduced by analogy. Then, the amplifier adjusts a gain based on the rate indication level output by the control unit, the filter adjusts a filtering bandwidth based on the rate indication level output by the control unit, and the equalizer adjusts an operating bandwidth based on the rate indication level output by the control unit.

It should be noted that, for a frame format of a target message in the second scenario, refer to the diagram shown in FIG. 6, to be specific, the frame format of the target message shown in FIG. 6 is compatible with the first scenario and the second scenario. In some possible implementations, only the ONU ID field, the ONU operating rate field, and the check field in the frame format shown in FIG. 6 may alternatively be retained, so that the second scenario can be adapted.

Third scenario: The optical module adjusts the operating parameter of the laser based on the target message.

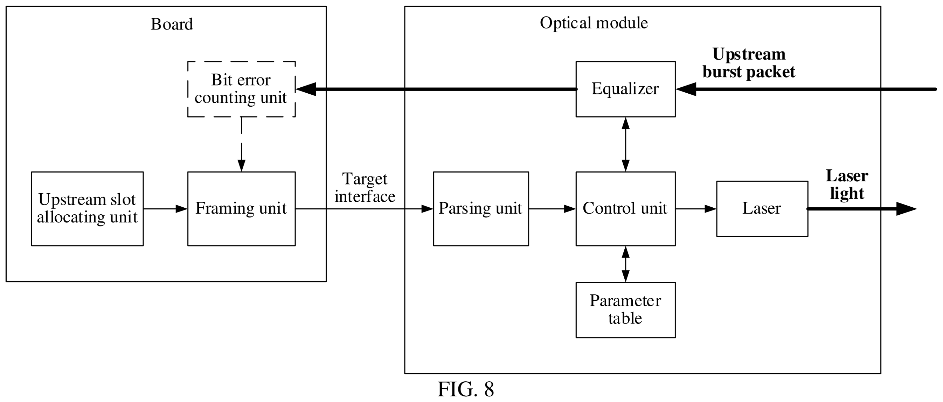

FIG. 8 is a diagram of a third scenario in which a board controls an optical module according to an embodiment of this application. Different from the scenarios shown in FIG. 4 and FIG. 7, as shown in FIG. 8, the control unit of the optical module determines an operating parameter of a laser based on information obtained by the parsing unit through parsing. The information obtained by the parsing unit through parsing includes indication information, where the indication information indicates whether the laser emits light. The control unit outputs, to the laser based on the indication information, an indication level indicating whether to emit light. For example, if the indication level is a high level, the laser emits light normally; or if the indication level is a low level, the laser does not emit light. In an example, the laser is controlled to emit light during normal operation, and the laser is controlled not to emit light during energy saving. In another example, during protection switching of a PON system, a laser corresponding to one PON port is controlled not to emit light, and a laser corresponding to another PON port is controlled to emit light.

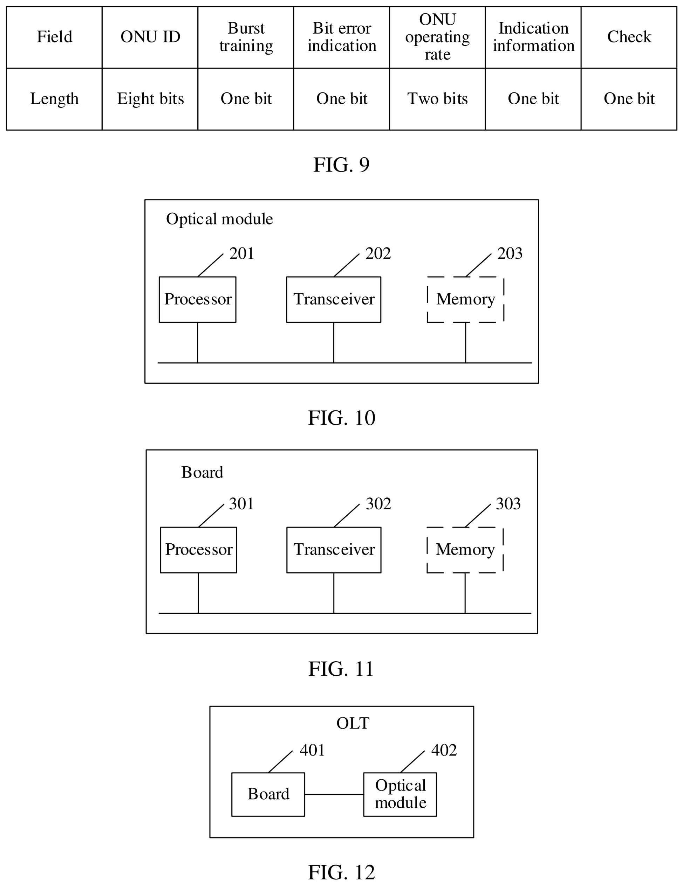

FIG. 9 is a diagram of a second frame format of a target message according to an embodiment of this application. Different from the frame format shown in FIG. 6, as shown in FIG. 9, the target message further includes an indication information field with a length of one bit. For example, a value 0 of the indication information field indicates the laser not to emit light, and a value 1 of the indication information field indicates the laser to emit light. It should be understood that the frame format of the target message shown in FIG. 9 is compatible with the first scenario, the second scenario, and the third scenario.

It can be learned from the foregoing descriptions that, during upstream slot allocation, a board in an OLT obtains information such as an identifier of a target ONU and a target operating rate of the target ONU, and the board sends the information to an optical module in the OLT through a target interface. Then, the optical module determines an operating parameter based on the information carried in a target message, for example, determines operating parameters of an equalizer, an amplifier, a filter, and a laser. In other words, this application provides a new interface solution between a board and an optical module. The board can transfer more information to the optical module according to the new interface solution, to satisfy higher complexity and efficiency requirements of the board for controlling the optical module.

The following describes a board, an optical module, and an optical module in an OLT that are provided in embodiments of this application.

FIG. 10 is a diagram of a possible structure of an optical module according to an embodiment of this application. As shown in FIG. 10, the optical module includes a processor 201 and a transceiver 202. The processor 201 and the transceiver 202 are connected to each other through a line. It should be noted that the transceiver 202 is configured to perform step 102 in the embodiment shown in FIG. 2, and the processor 201 is configured to perform step 103 in the embodiment shown in FIG. 2. In a possible implementation, the processor 201 includes the parsing unit, the control unit, and the equalizer shown in FIG. 4. In another possible implementation, the processor further includes the amplifier and the filter shown in FIG. 7. In still another possible implementation, the processor further includes the laser shown in FIG. 8. Optionally, the optical module further includes a memory 203. The memory 203 is configured to store program instructions and data. For example, the memory stores the parameter table shown in FIG. 4.

FIG. 11 is a diagram of a possible structure of a board according to an embodiment of this application. As shown in FIG. 11, the board includes a processor 301 and a transceiver 302. The processor 301 and the transceiver 302 are connected to each other through a line. It should be noted that the processor 301 is configured to perform step 101 in the embodiment shown in FIG. 2, and the transceiver 302 is configured to perform step 102 in the embodiment shown in FIG. 2. In a possible implementation, the processor 301 includes the foregoing upstream slot allocating unit and the foregoing framing unit. In another possible implementation, the processor 301 further includes the foregoing bit error counting unit. Optionally, the board further includes a memory 303, and the memory 303 is configured to store program instructions and data.

FIG. 12 is a diagram of a possible structure of an optical module in an OLT according to an embodiment of this application. As shown in FIG. 12, the optical module includes a board 401 and an optical module 402. For the board 401, refer to related descriptions in FIG. 11. For the optical module 402, refer to related descriptions in FIG. 10. Details are not described herein again.

A person skilled in the art may clearly understand that, for the purpose of convenient and brief description, for a detailed working process of the foregoing system, apparatus, and unit, refer to a corresponding process in the foregoing method embodiments. Details are not described herein again.

A person of ordinary skill in the art may understand that all or some of the steps in the foregoing embodiments may be implemented by hardware or a program instructing related hardware. The program may be stored in a computer-readable storage medium. The storage medium mentioned above may be a read-only memory, a random access memory, or the like. Specifically, for example, the foregoing processing unit or processor may be a central processing unit, a general-purpose processor, a digital signal processor (DSP), an application-specific integrated circuit (ASIC), a field programmable gate array (FPGA) or another programmable logic device, a transistor logic device, a hardware component, or any combination thereof. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

When software is used to implement the functions, all or some of the method steps described in the foregoing embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (SSD)), or the like.

## Claims

1. A method for controlling an optical module by a board in an optical line terminal OLT, wherein there is a target interface between the board and the optical module, and the method comprises:
receiving, by the optical module through the target interface, a target message sent by the board, wherein the target message comprises an identifier of a target optical network unit ONU and a target operating rate of the target ONU; and
determining, by the optical module, an operating parameter based on the target message.

2. The method according to claim 1, wherein the board comprises a media access control MAC chip, the optical module comprises a physical PHY chip, and there is the target interface between the MAC chip and the PHY chip.

3. The method according to claim 1 or 2, wherein determining, by the optical module, the operating parameter based on the target message comprises:
determining, by the optical module from a preset parameter table, a first tap coefficient corresponding to the identifier of the target ONU, wherein the parameter table comprises at least one correspondence, and the correspondence is a correspondence between an identifier of an ONU and a tap coefficient of an equalizer; and
performing, by the optical module, convergence based on the first tap coefficient to obtain a second tap coefficient.

4. The method according to claim 3, wherein the parameter table comprises m tap coefficients corresponding to the identifier of the target ONU, the m tap coefficients correspond one to one to m transmit rates of the target ONU, and m is an integer greater than 1; and
determining, by the optical module from the parameter table, the first tap coefficient comprises:
determining, by the optical module from the m tap coefficients, the first tap coefficient corresponding to the target operating rate.

5. The method according to claim 3 or 4, wherein the method further comprises:
equalizing, by the optical module based on the second tap coefficient, a target signal sent by the target ONU.

6. The method according to claim 5, wherein the target message further comprises a comparison result between a bit error rate of an equalized target signal and a first preset value, and the method further comprises:
if the bit error rate is less than the first preset value, performing, by the optical module, convergence based on the second tap coefficient to obtain a third tap coefficient, and equalizing the target signal based on the third tap coefficient; or
if the bit error rate is greater than or equal to the first preset value, performing, by the optical module, convergence again based on the first tap coefficient.

7. The method according to any one of claims 3 to 6, wherein the target message further comprises a comparison result between a packet length of the target signal sent by the target ONU and a second preset value, and the method further comprises:
if the packet length is greater than or equal to the second preset value, performing, by the optical module, convergence based on the first tap coefficient to obtain the second tap coefficient; or
if the packet length is less than the second preset value, equalizing, by the optical module based on the first tap coefficient, the target signal sent by the target ONU.

8. The method according to any one of claims 3 to 7, wherein the method further comprises:
storing, by the optical module in the parameter table, a correspondence between the identifier of the target ONU and the second tap coefficient.

9. The method according to claim 1 or 2, wherein determining, by the optical module, the operating parameter based on the target message comprises:
determining, by the optical module, a gain of an amplifier, a filtering bandwidth of a filter, and an operating bandwidth of an equalizer based on the target operating rate.

10. The method according to claim 1 or 2, wherein the target message further comprises indication information, the indication information indicates a laser to emit light or not to emit light, and determining, by the optical module, the operating parameter based on the target message comprises:
determining, by the optical module, an operating parameter of the laser based on the indication information.

11. A method for controlling an optical module by a board in an optical line terminal OLT, wherein there is a target interface between the board and the optical module, and the method comprises:
generating, by the board, a target message, wherein the target message comprises an identifier of a target optical network unit ONU and a target operating rate of the target ONU; and
sending, by the board, the target message to the optical module through the target interface, to enable the optical module to determine an operating parameter based on the target message.

12. The method according to claim 11, wherein the board comprises a media access control MAC chip, the optical module comprises a physical PHY chip, and there is the target interface between the MAC chip and the PHY chip.

13. The method according to claim 11 or 12, wherein the method further comprises:
obtaining, by the board, a bit error rate obtained by the optical module by equalizing a target signal sent by the target ONU; and
comparing, by the board, the bit error rate with a first preset value, wherein the target message further comprises a comparison result between the bit error rate and the first preset value.

14. The method according to any one of claims 11 to 13, wherein the method further comprises:
obtaining, by the board, a packet length of the target signal sent by the target ONU; and
comparing, by the board, the packet length with a second preset value, wherein the target message further comprises a comparison result between the packet length and the second preset value.

15. The method according to any one of claims 11 to 14, wherein the target message further comprises indication information, and the indication information indicates a laser to emit light or not to emit light.

16. An optical module, wherein an optical line terminal OLT comprises the optical module and a board, there is a target interface between the optical module and the board, and the optical module comprises a processor and a transceiver, wherein
the transceiver is configured to receive, through the target interface, a target message sent by the board, wherein the target message comprises an identifier of a target optical network unit ONU and a target operating rate of the target ONU; and
the processor is configured to determine an operating parameter based on the target message.

17. The optical module according to claim 16, wherein the board comprises a media access control MAC chip, the optical module comprises a physical PHY chip, and there is the target interface between the MAC chip and the PHY chip.

18. The optical module according to claim 16 or 17, wherein the processor is specifically configured to:
determine, from a preset parameter table, a first tap coefficient corresponding to the identifier of the target ONU, wherein the parameter table comprises at least one correspondence, and the correspondence is a correspondence between an identifier of an ONU and a tap coefficient of an equalizer; and
perform convergence based on the first tap coefficient to obtain a second tap coefficient.

19. The optical module according to claim 18, wherein the parameter table comprises m tap coefficients corresponding to the identifier of the target ONU, the m tap coefficients correspond one to one to m transmit rates of the target ONU, and m is an integer greater than 1; and the processor is specifically configured to:
determine, from the m tap coefficients, the first tap coefficient corresponding to the target operating rate.

20. The optical module according to claim 18 or 19, wherein the processor is further configured to:
equalize, based on the second tap coefficient, a target signal sent by the target ONU.

21. The optical module according to claim 20, wherein the target message further comprises a comparison result between a bit error rate of an equalized target signal and a first preset value, and the processor is further configured to:
if the bit error rate is less than the first preset value, perform convergence based on the second tap coefficient to obtain a third tap coefficient, and equalize the target signal based on the third tap coefficient; or
if the bit error rate is greater than or equal to the first preset value, perform convergence again based on the first tap coefficient.

22. The optical module according to any one of claims 18 to 21, wherein the target message further comprises a comparison result between a packet length of the target signal sent by the target ONU and a second preset value, and the processor is further configured to:
if the packet length is greater than or equal to the second preset value, perform convergence based on the first tap coefficient to obtain the second tap coefficient; or
if the packet length is less than the second preset value, equalize, based on the first tap coefficient, the target signal sent by the target ONU.

23. The optical module according to any one of claims 18 to 22, wherein the processor is further configured to:
store, in the parameter table, a correspondence between the identifier of the target ONU and the second tap coefficient.

24. The optical module according to claim 16 or 17, wherein the processor is specifically configured to:
determine a gain of an amplifier, a filtering bandwidth of a filter, and an operating bandwidth of an equalizer based on the target operating rate.

25. The optical module according to claim 16 or 17, wherein the target message further comprises indication information, and the indication information indicates a laser to emit light or not to emit light; and the processor is specifically configured to:
determine an operating parameter of the laser based on the indication information.

26. A board, wherein an optical line terminal OLT comprises an optical module and the board, there is a target interface between the optical module and the board, and the board comprises a processor and a transceiver, wherein
the processor is configured to generate a target message, wherein the target message comprises an identifier of a target optical network unit ONU and a target operating rate of the target ONU; and
the transceiver is configured to send the target message to the optical module through the target interface, to enable the optical module to determine an operating parameter based on the target message.

27. The board according to claim 26, wherein the board comprises a media access control MAC chip, the optical module comprises a physical PHY chip, and there is the target interface between the MAC chip and the PHY chip.

28. The board according to claim 26 or 27, wherein the processor is further configured to:
obtain a bit error rate obtained by the optical module by equalizing a target signal sent by the target ONU; and
compare the bit error rate with a first preset value, wherein the target message further comprises a comparison result between the bit error rate and the first preset value.

29. The board according to any one of claims 26 to 28, wherein the processor is further configured to:
obtain a packet length of the target signal sent by the target ONU; and
compare the packet length with a second preset value, wherein the target message further comprises a comparison result between the packet length and the second preset value.

30. The board according to any one of claims 26 to 29, wherein the target message further comprises indication information, and the indication information indicates a laser to emit light or not to emit light.

31. An optical line terminal OLT, wherein the OLT comprises the optical module according to any one of claims 16 to 25 and the board according to any one of claims 26 to 30.
